(19) Europäisches Patentamt
European Patent Office
Office européen des brevets

(11) **EP 0 918 654 B1**

(12) **EUROPEAN PATENT SPECIFICATION**

(45) Date of publication and mention
of the grant of the patent:
**24.10.2001 Bulletin 2001/43**

(51) Int Cl.[7]: **B60C 11/12**, B60C 11/04,
B29D 30/06

(21) Application number: **96924684.2**

(22) Date of filing: **22.07.1996**

(86) International application number:
**PCT/US96/12121**

(87) International publication number:
**WO 98/03357 (29.01.1998 Gazette 1998/04)**

(54) **A TIRE TREAD HAVING FLOW-THROUGH GROOVES**

REIFENLAUFFLÄCHE MIT DURCHFLUSSNUTEN

BANDE DE ROULEMENT DE PNEUMATIQUE DOTEE DE SILLONS POUR ECOULEMENT DIRECT

(84) Designated Contracting States:
**DE ES FR GB IT NL**

(43) Date of publication of application:
**02.06.1999 Bulletin 1999/22**

(73) Proprietor: **THE GOODYEAR TIRE & RUBBER
COMPANY
Akron, Ohio 44316-0001 (US)**

(72) Inventor: **SCHUSTER, Daniel, Edward
North Royalton, OH 44133 (US)**

(74) Representative: **Leitz, Paul
Goodyear Technical Center,
Patent Department,
Avenue Gordon Smith
7750 Colmar-Berg (LU)**

(56) References cited:
**US-A- 3 727 661       US-A- 4 353 402
US-A- 5 115 850**

## Description

## Technical Field

This invention relates to a method and article of manufacture known as a tire, more specifically a tire tread.

## Background Art

Tires are generally manufactured utilizing a process invented by Charles Goodyear called vulcanization.

This vulcanization of the tire cures green rubber components either prior to assembly or thereafter.

The most common method involves placing the tire casing and its tread rubber in a mold, applying heat and pressure thus forming the tread pattern while simultaneously curing the tire assembly.

A second method involves premolding the tread by compression or injection molding and then applying the tread to either a prepared precured carcass, in a process commonly referred to as retreading or to apply the tread to a new cured or uncured casing to make a new tire.

A common feature in the treads for tires is the use of grooves, both circumferentially continuous or laterally extending. The mold which makes these grooved tread patterns typically has metal ribs projecting from the tread outer surface forming portion of the mold. These metal ribs form the grooves.

When the tread has deep grooves, these metal ribs project outwardly a considerable distance. This is particularly true for heavy duty trucks and some snow tires used on passenger type vehicles. These groove forming ribs in the mold can act as rubber flow restrictors. For example a circumferentially continuous groove has a metal rib that extends 360° thus restricting lateral flow of the tread rubber during the vulcanization process.

Tires having a block element tread pattern have a series of laterally extending grooves formed by metal ribs which can create a circumferential restriction of the rubber flow.

To the untrained eye tires having deep treads may for all intents and purposes appear uniform. Occasionally the tire manufacture may have to grind some of the tread away because of high spots formed during molding. These high spots are only a symptom of a much deeper problem that has occurred during the molding process. When green tires are inserted into the curing molds it is virtually impossible to perfectly align the tire in the mold. As a result there occurs a potential undesirable mass imbalance of tread rubber that leads to nonuniformities in the cured tread. The tread rubber must flow across or around the rib in order to balance the mass of rubber across the tread. The groove forming mold ribs create dams that prevent the tread rubber from uniformly flowing across the tread pattern during the molding process. This is particularly troublesome during the compression molding process because the uncured green rubber may have thick portions that if restricted between metal groove forming ribs and the underlying belt package of the carcass will result in a tread that has high density rubber in one spot and lower density rubber in another spot. These changes in density affect the physical properties of the tread such that the performance of the tread may be nonuniform yielding a propensity for the occurrence of irregular wear problems, variation in hysteretic performance and heat generated problems, and poor rolling resistance properties. Furthermore, this problem causes the belt reinforcement to deform or deflect as a result, the depth of the tread pattern has been limited to a sufficiently shallow depth and the undertread between the mold rib and the belts is made sufficiently thick to avoid this restrictive flow problem. This, however, tends to limit the amount of mileage one can expect from a tread. Material compounds can be developed for extended mileage, however, if these compounds can be employed in deeper nonskid treads even better mileage performance can be realized if the physical properties of the tread can be uniformly maintained during the molding process.

US-A-3 727 661 discloses a tire showing the features of the preamble of claim 6.

An object of the present invention is to teach a method to form a grooved tire tread having uniform physical properties.

A further object of the invention is to disclose a deeper grooved tread for a tire having uniform physical properties.

## Description of the Invention

**Summary of the Invention.** A method of molding a tread and undertread for a tire has the steps of independent claim 1.

Preferably the flow paths 10 each have an elongated length $P_L$ and a width $P_W$ as measured perpendicular to the length $P_L$. The width $P_W$ extends across the mold rib intersecting the respective groove walls formed by the mold rib 20.

In the preferred method the step of providing a mold 2 includes the step of providing at least one circumferential groove forming mold rib 20 having a plurality of flow paths 10. The rib 20 has sides for forming the groove walls inclined from the radial direction and a groove maximum gap length $G_L$ between adjacent flow paths wherein the plurality of flow paths satisfy the relationship $6 \times G_L \geq P_L \geq 2 \times G_L$.

Most preferably the method includes the steps of inserting a tire casing 7 into the mold 2 along with the uncured tread rubber thus forming a tire assembly 8 and removing the tire assembly 8 after curing and forming the tread 6 and tire casing 7 assembly 8.

The resultant tread 6 formed by the above method is also claimed. The tread 6 has a depth D as measured from the base or bottom of the groove to the tread surface and rubber filled flow paths 30 having a height of about 3 mm.

It is believed preferable that the rubber filled paths should have the respective ends 34,36 inclined at an angle θ of about 20° relative to the radial direction and are spaced at location 42 a distance $G_L$ of about 5 mm (0.2 inch). This prevents stones from being trapped between the flow paths 30.

**Definitions.** "Aspect ratio" of the tire means the ratio of its section height (SH) to its section width (SW) multiplied by 100% for expression as a percentage.

"Asymmetric tread" means a tread that has a tread pattern not symmetrical about the centerplane or equatorial plane EP of the tire.

"Casing" means the carcass, belt structure, beads, sidewalls, and all other components of the tire excepting the tread and undertread. The casing may be new, unvulcanized rubber or previously vulcanized rubber to be fitted with a new tread.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Footprint" means the contact patch or area of contact of the tire tread with a flat surface at zero speed and under normal load and pressure.

"Groove" means an elongated void area in a tread that may extend circumferentially or laterally about the tread in a straight, curved, or zigzag manner.

"Lateral" means an axial direction.

"Net contact area" means the total area of ground contacting elements between defined boundary edges divided by the gross area between the boundary edges as measured around the entire circumference of the tread.

"Net-to-gross ratio" means the total area of ground contacting tread elements between the lateral edges around the entire circumference of the tread divided by the gross area of the entire tread between the lateral edges.

"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning. "Axial" and "axially" means lines or directions that are parallel to the axis of rotation of the tire.

"Pneumatic tire" means a laminated mechanical device of generally toroidal shape (usually an opentorus) having beads and a tread and made of rubber, chemicals, fabric and steel or other materials. When mounted on the wheel of a motor vehicle, the tire contains the fluid that sustains the vehicle load and through its tread provides traction.

Precured component means a component at least partially vulcanized prior to assembly with other unvulcanized components.

"Radial" and "radially" means directions radially toward or away from the axis of rotation of the tire.

"Replacement tread" as used herein refers to either a "mold cure" or a premolded and precured tread.

"Retreading" means the procedure of refurbishing a tread worn tire by removing the old tread and replacing it with a precured tread or a "mold cure" tread.

"Tread" means a molded rubber component which, when bonded to a tire casing, includes that portion of the tire which comes into contact with the road when the tire is normally inflated and under normal load.

"Rib" means a circumferentially extending strip of rubber on the tread which is defined by at least one circumferential groove and either a second such groove or a lateral edge, the strip being laterally undivided by full-depth grooves.

"Sipe" means small slots molded into the tread elements of the tire that subdivide the tread surface and improve traction.

"Tread element" or "traction element" means a rib or a block element.

**Brief Description of Drawings:**

Fig. 1 is a developed fragmentary plan view of a tire mold showing the protruding ribs for forming circumferential grooves according to the invention.

Fig. 2 is a cross-sectional view of a rib taken along line 2-2 of Fig. 1.

Fig. 3 is a developed fragmentary view of a first embodiment tread formed according to the inventive method using the mold of Fig. 1.

Fig. 4 is a cross-sectional view of the tread taken along a groove length along lines 4-4 of Fig. 3.

Fig. 5 is a cross-sectional view of the tread taken along a groove width along lines 5-5 of Fig. 3.

Fig. 6 is a developed fragmentary plan view of a tire mold showing the protruding ribs for forming both lateral and circumferential grooves according to the invention.

Fig. 7 is a cross-sectional view of a rib taken along line 7-7 of Fig. 6.

Fig. 8 is a developed fragmentary view of a second embodiment tread formed according to the inventive method using the mold of Fig. 5..

Fig. 9 is a cross-sectional view of the tread taken along a groove length along lines 9-9 of Fig. 8.

Fig. 10 is a cross-sectional view of the tread taken along a groove width along lines 10-10 of Fig. 8.

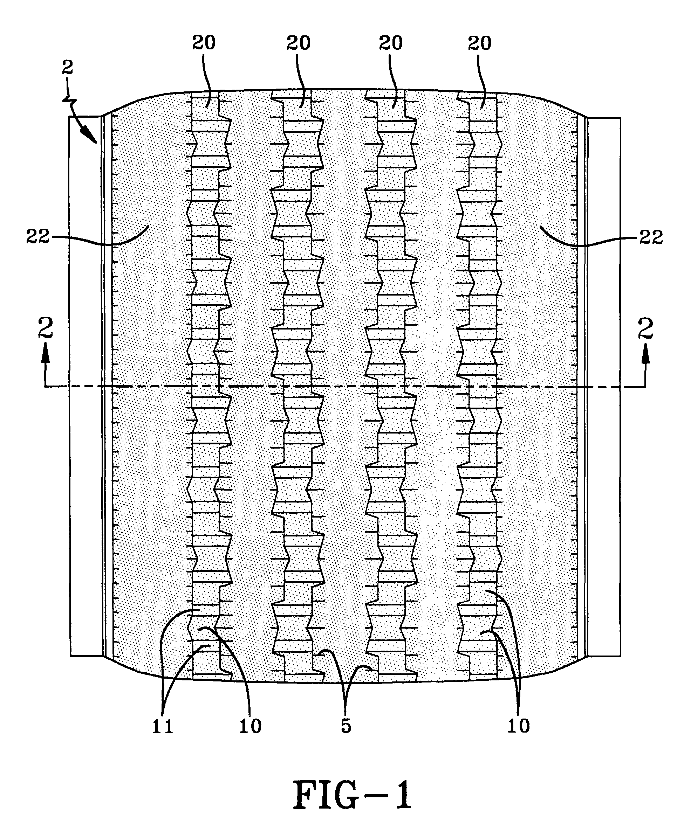

**Detailed Description of the Invention.** With reference to Fig. 1 there is shown a portion of a mold 2, the illustrated portion depicts a pattern for forming a tread for a tire the tread having a rib-type tread.

Blades 5 are placed in the mold 2 for forming sipes. Ribs 20 are employed to form grooves 40. Recesses 22 between the ribs 20 are used to form the tread elements such as ribs 50, blocks or lugs 52.

With particular attention drawn to ribs 20 there is shown a plurality of openings referred hereinafter as "flow paths" 10. These flow paths 10 extend across the mold ribs 20 creating open flow channels between adjacent tread block 52 or rib 50 forming recesses 22 in the mold 2. These flow paths 10 are elongated in length $P_L$ along the direction of the groove path forming rib 20.

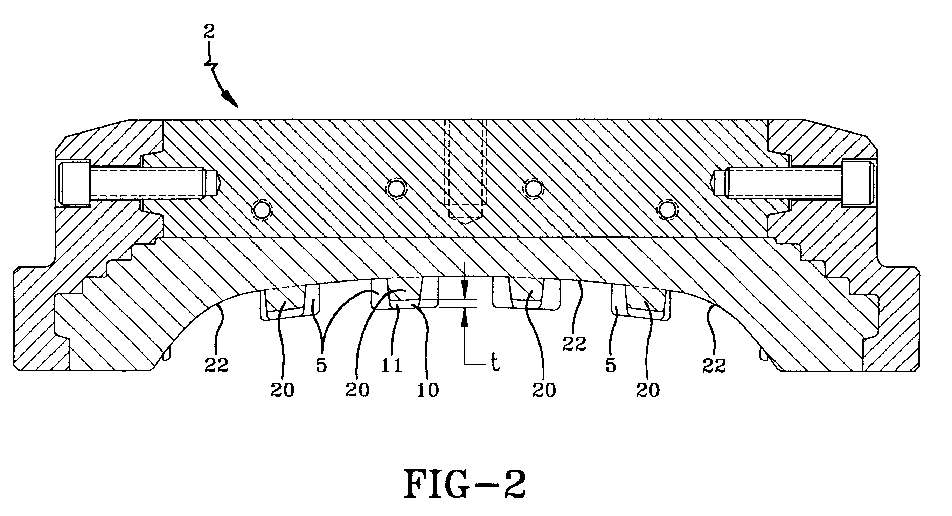

In Fig. 2 a cross-sectional view of the rib 20 with flow paths 10 is shown.

The rib 20 projects outwardly from the tread element forming recess 22. The benefits of the invention are equally appreciated on the entire range of groove depths currently used on tires and may, in fact, make it possible to even deepen these grooves to permit treads as deep as 32 mm (40/32 inch of an inch). The rib 20 which forms the groove creates a flow restriction of the rubber during molding. Conventionally in heavy duty truck tires the tire has a minimum gauge amount of undertread 54 between the outermost surface of the reinforcing belt structure 60 and the base or bottom 44 of the grooves 40. For purposes of tread rubber flow in the mold and belt cord protection, this undertread 54 has a gauge thickness $U_t$ is usually kept at about 6 mm (8/32 inch).

When green tires 4 are inserted into the curing molds it is virtually impossible to perfectly align the tire 4 in the mold 2. As a result there occurs a potential undesirable mass imbalance of tread rubber that leads to nonuniformities in the cured tread 6. The tread rubber must flow across or around the rib 20 in order to balance the mass of rubber across the tread. As the undertread 54 becomes thinner, the restriction of rubber flow increases substantially. Applicant has found that localized increases of the undertread 54 can be achieved by using pluralities of open flow paths 10 that completely cross the ribs 20.

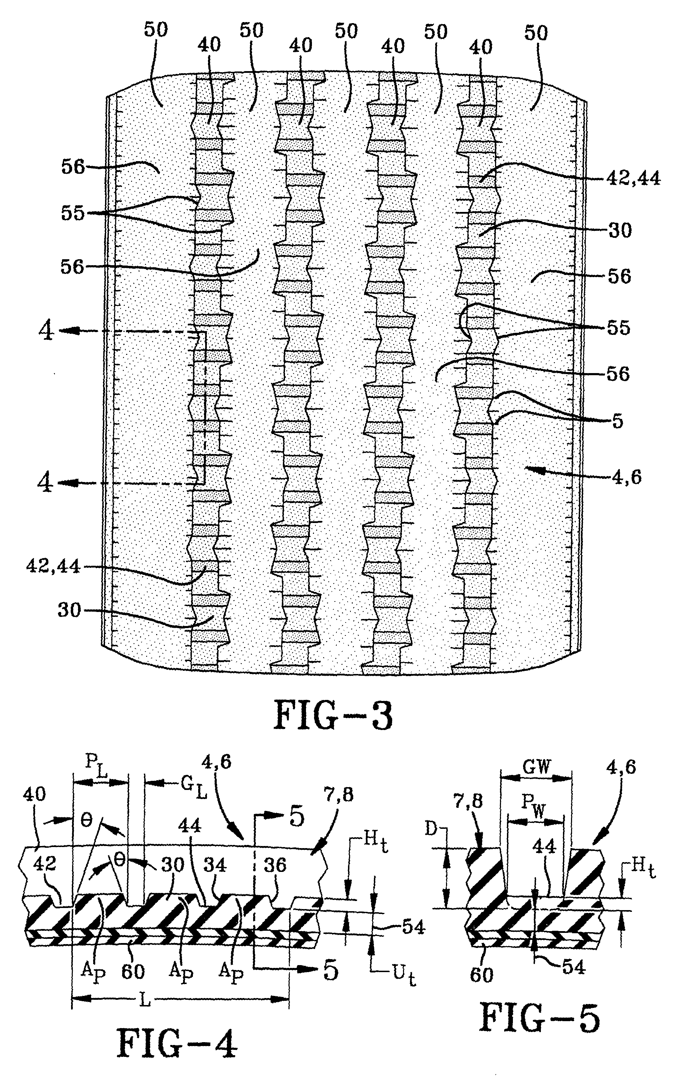

Ideally the flow paths 10 are notches which are cut into the mold rib 20 at a distance t of 3 mm (4/32 of an inch) from the tip 11 of the mold rib 20 as shown in Fig. 2. This creates a passageway for the green tread rubber to flow from one side of mold rib 20 to the other side and as shown in Fig. 3 result in a rubber filled flow path 30 in the base 44 of the groove 40 which was formed by the mold rib 20. This depth 3 mm (4/32 inch) is considered ideal in a truck steer tire tread because it is the required removal tread depth in many jurisdictions. This rubber filled flow path acts as a tread wear indicator for steer tire applications.

In other applications the tread wear indicators are set at 1.5 mm (2/32 of an inch) in such a case the rubber filled flow paths 30 may project 1.5 mm (2/32 of an inch) above the actual useable tread. However ,due to the fact that the flow paths 30 are designed to also function as stone penetration protectors, this is quite a common height for such features commonly found in the base of the grooves 40.

What is quite uncommon is the size and the spacing of the rubber filled flow paths. As shown in Fig. 4 of the molded tire, the groove 40 cross-section has flow paths 30 that are elongated in length $P_L$ as measured from the base of and along the length of the groove in which it lies.

The flow path 30 should have a length $P_L$ which is greater than the distance 42 between adjacent flow paths 30. The resultant rubber filled flow path has a minimum height ($H_t$) preferably set at 3 mm or 4/32 of an inch above the bottom 44 of the groove 40. Preferably these flow paths 30 are closely spaced along a groove 40 within a gap distance $G_L$ of 50% of $P_L$ or less as measured at location 42. As shown the ends 34,36 of the flow paths are inclined at an angle of θ, θ being about 20° relative to the radial direction. These large sloping ends further prevent stone retention.

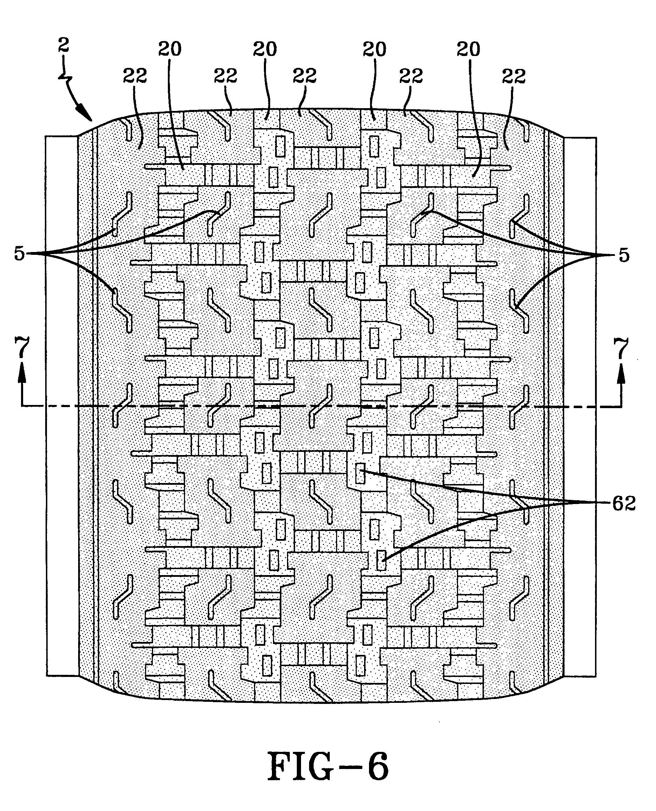

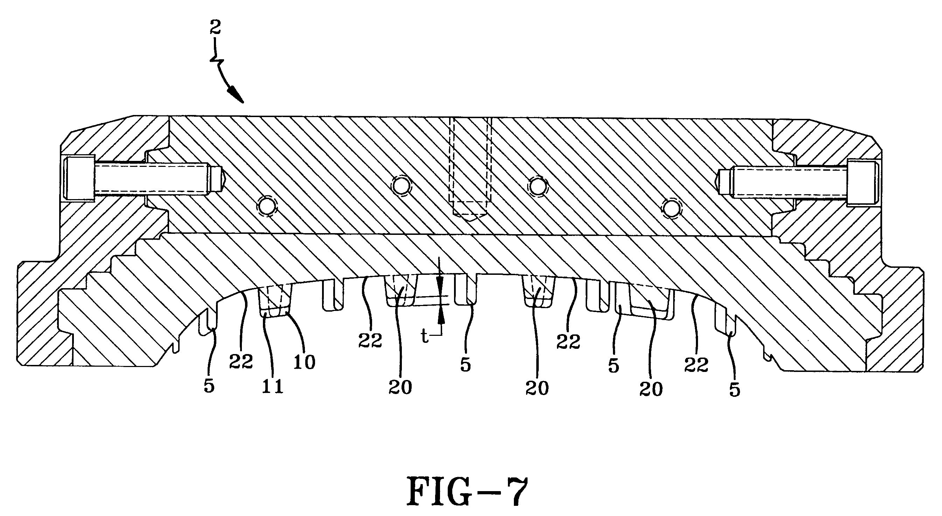

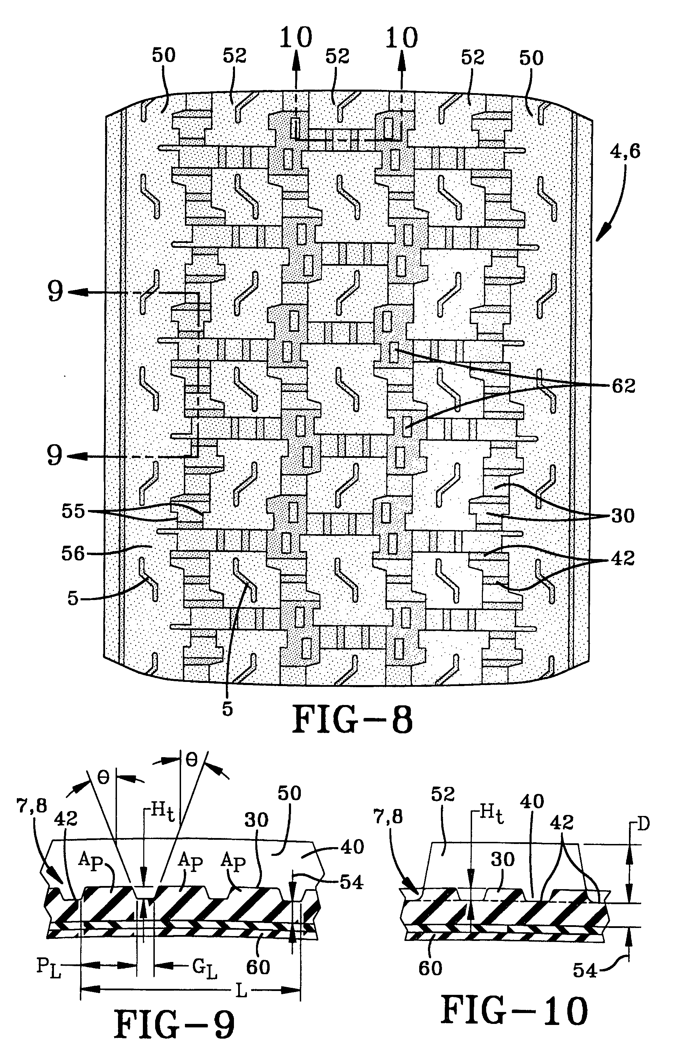

The use of these flow paths 30 are most beneficial in circumferentially continuous grooves 40. The grooves 40 have a width $G_W$. The flow paths 30 have a width $P_W$. As shown in Figs. 5-10 when lateral grooves 40 are used in combination with circumferential grooves 40 to form block elements 52, the flow paths 10,30 can substitute for tie bars that connect adjacent blocks 52 wherein the gap $G_L$ between flow paths in lateral grooves maintains a measurable full depth groove giving the operator a further indication of remaining useable tread. In either case the beneficial effect of equalizing the amount of tread rubber across the tread pattern as the tread 6 is molded can best be achieved by generous use of these rubber filled flow paths 30. The increase in the cross-sectional flow area across a mold groove forming rib 20 groove is measured as the number of flow paths 10 (N) times the cross-sectional area $A_p$ of the flow paths. Without these flow paths the area for rubber flow under the ribs 20 is limited to the cross-sectional area of the undertread 54 at that location. Although the flow paths 30 do not yield a full increase in the flow area due to the gap or at location 42, they do contribute substantially to the uniform density of the tread 6 virtually eliminating the occurrence of high low blocks 52 and ribs 50 common in truck tires 4. Additionally, stone penetration protectors 62 may also be used in the tread.

It is believed that no matter what compounding or chemical composition of matter is developed in the future to improve or extend the tread life of a truck tire, the present invention can further extend the useful life of the tread.

Another important feature of the inventive method for producing a deep nonskid tread 6 is the uniformity of pressure and density within a given rib 50 or block element 52. This is to distinguish from the overall better uniformity of the inventive tread 6. Directly under the ribs 20 of the mold 2, tread rubber must be displaced to either side as the mold 2 closes. This displaced tread rubber increases the density of the rubber elements 50,52 directly under and alongside the ribs 20 resulting in either higher density or peaking of the tread edges 55 adjacent the groove 40 formed by the mold rib 20. This phenomena is manifested by an undulating or wavy belt reinforcement 60 of the molded tire 4. It is believed when tires are inflated and the tread is worn the belts tend to straighten causing noticeable high and low points that can further accelerate irregular wear. At the least these wavy belts are a nonuniformity that can be eliminated or greatly minimized by use of the inventive flow paths 10 in the mold ribs 20. This means that the tread element 52 or rib 50, when the tire 4 is normally inflated and loaded, will exhibit higher contact pressure along the tread edges 55. Conversely, the center portions 56 of the tread elements 50,52 exhibit lower pressure. It is believed more beneficial to have the block elements 52 or ribs 50 uniformly loaded for improved uniform wear. It is believed likely that these nonuniformities within the ribs 50 or blocks 52 is one of the root causes of the initiation of irregular wear such as heel and toe wear, cupping and river wear. Once these conditions start they rapidly progress.

This is not to say that the physical design of a tread pattern does not also play an important role in tread wear, but it is believed regardless of the tread pattern chosen the tire engineer must try to achieve a uniform pressure distribution across the tire's contact patch or footprint. Much work has been directed to these goals by selection of carcass and belt structure and mold shape. Often times engineers would mold smooth treaded tires and would then carve a tread pattern into the tread as a quick expedient to test the tread concept. These carved tires naturally had very uniform tread density. The resultant carved tires would needless to say show promise. An experimental mold would be ordered and the molded tread would disappointedly show unexpected poor wear characteristics. The only difference being the carved tires were made with a homogeneous tread of great material property uniformity and the molded tread had material property nonuniformities added as a result of the molding process.

Those skilled in the art will readily recognize that the inventive method of molding a tread as disclosed herein can achieve the uniform properties of the carved tread of experimental tires while being able to use a molded tread pattern suitable for mass production. If no other benefit was realized, the fact that eventual production tires will now more closely replicate the experimental carved tire performance is of great value to the tire engineer.

The above discussion has related to uniformity and resultant better wear performance by using the flow paths 10 in a mold 2. Additionally, several other benefits are possible when employing the use of flow paths 10 in a mold 2. A conventional truck tire 4 has about 8/32 undertread as measured from the base 44 of a circumferential groove 40. Above the base 44 of the groove 40 is a tread wear indicator set at 1.5 mm (2/32 of an inch). Steer tires are removed when there is 4/32 of tread left as measured from the base of the groove 40. This means that as much as 12/32 of the tread rubber is discarded contributing to no beneficial use or mileage. Lowering the undertread 54 gauge simply resulted in exacerbating the restrictive flow of tread rubber increasing the nonuniformities discussed earlier. However, by employing the flow paths 10 in a mold 2 spaced as shown, the undertread 54 can be reduced by at least 1.5 mm (2/32 of an inch) when using 4 mm in height flow paths 10. To better appreciate this concept of tread undertread gauge reduction, one should look at the tread over a given length L of a groove 40 as shown in Fig. 4. The summation of areas of the flow paths 30 equals $\Sigma A_p$, dividing $\Sigma A_p$ by L equals the amount of undertread reduction $\Delta U_t$. It should be understood that the areas $A_p$ of each flow path need not be the same. This assumes that for an overall reduction in undertread that flow paths are employed in all full depth grooves 40. It is possible to lower the undertread to as low as 3/32, the minimum allowed by law. The effective flow will be about the same as the prior art tire having 8/32 of undertread. Thus, with no increase in tread rubber, the useful amount of tread that can be worn will increase by at least 2/32 of an inch. This is true because the tread wear indicator will still be 1.5 mm (2/32 of an inch) above the bottom 54 of the groove 40 which is measured in the gap location 42 between flow paths 30 of the tire. No increase in tread weight will occur because as mentioned earlier the overall thickness of the tread rubber was not altered, actually a slight decrease occurs due to the reduction in the undertread.

Alternatively, to improve rolling resistance and thus provide better fuel efficiency the same lowering of the undertread could result in a corresponding reduction of tread rubber thickness at no loss in useable tread gauge. If the undertread is reduced by 1.5 mm (2/32 of an inch) to 5/32 of an inch the overall tread thickness could proportionately be lowered on a 1 to 1 ratio. The result would be the same or better wear rate as conventionally achieved with a substantially lighter tread. Assuming a 26/32 inch nonskid tire depth is maintained the prior art tire would employ 34/32 of nonskid and undertread depth whereas the same 26/32 inch tread could be made with flow paths 30 having a 29/32 nonskid and undertread gauge. The resultant savings in material of 5/32 of an inch of tread gauge translates to about 4 to 6 pounds of rubber per tire. A very substantial savings that improves the uniformity and the utility of tire.

Additionally as can be seen the use of numerous flow paths 30 provide superior stone penetration protection to those currently in use because there is more protection provided for the base of the groove when compared to button type protectors.

The cost of making the plaster model is also reduced by eliminating the costly venting system required to enable rubber to flow into the recess used to form the protector.

The flow paths 30 allows easier measurement of the tread gauge due to the elimination of vent flash which interferes with the tread gauge probe.

The flow paths 30 contribute to increasing the stability of the ribs and blocks which enhances vehicle stability and handling.

**Claims**

1. A method of molding a tread (6) and undertread (54) for a tire (4) comprising the steps of:

   providing a mold (2) for forming a tread pattern in the rubber tire tread (6), the mold having at least one rib (20) for forming a groove (40) in the tire tread, the at least one rib (20) having a plurality of elongated in length flow paths (10), the elongated flow paths being notches cut into the rib and spaced, wherein the area $A_p$ of the flow path (10) when viewed in cross-section along the lengths ($P_1$) of the flow path (10) is greater than the area between adjacent flow paths at the same depth as measured from a tip (11) of the rib (20) which forms the base (44) of the groove (40) to the minimum height ($H_t$) at the top of the flow path (10) forming notch;
   inserting uncured tread rubber into the mold;
   applying heat and pressure to cure and form the tread and undertread;
   removing the cured and formed tread (6) and undertread (54) from the mold (2)

   **characterized in that** the undertread gauge thickness $U_t$ ranges between 2 mm and 6 mm as measured between the base (44) of the groove (40) radially inwardly.

2. The method of claim 1 wherein the flow path (10) in the mold rib (20) is defined by an elongated length $P_L$ having a minimum notch depth measured from the base (44) of the groove (40) formed by the mold rib (20) of t and a width $P_W$ extending across the mold rib (20) intersecting the respective groove walls formed by the mold ribs (20), the distance between the flow paths (10) being less than 50% of the length $P_L$.

3. The method of claim 1 wherein the steps of providing a mold (2) includes the step of establishing the flow path depth t in the mold rib (20) at least at 3 mm (4/32 inch).

4. The method of claim 3 wherein the step of providing a mold (2) includes the step of providing at least one circumferential groove (40) forming mold rib (20) having the plurality of flow paths (10) wherein the flow paths, have ends inclined at 20° and a gap length $G_L$ between adjacent flow paths, wherein the plurality of flow paths (10) satisfy the relationship 6 x $G_L \geq P_L \geq 2$ x $G_L$.

5. The method of claim 1 further comprises the steps of:

   inserting a tire casing into the mold (2) along with the uncured tread rubber, thus forming a tire assembly (8);
   and removing the tire assembly (8) after curing and forming the tread (6) undertread (54) and tire casing (7) assembly.

6. A tread (6) and undertread (54) for a tire (4), the tread having a plurality of grooves (40) at least one groove having a base (44) and a plurality of rubber-filled elongated-in-length flow paths (30), the length being defined as the direction along the groove path, the flow paths (30) extending widthwise from one groove wall to the opposite groove wall and being spaced along the length of the groove (40) wherein the area of the flow path when viewed in cross sections along the length of the flow path (30) is greater than the void area between adjacent flow paths at the same depth as measured from the base of the groove to the minimum height ($H_t$) at the top of the flow path **characterized in that** the undertread gauge thickness $U_t$ ranges between 2 mm and 6 mm as measured between the base (44) of the groove (40) radially inwardly.

7. The tread (6) and undertread (54) of claim 6 wherein the rubber filled flow paths (30) have an elongated length $P_L$, a width $P_W$ measured perpendicular to the length $P_L$, the width $P_W$ extending across the groove (40) intersecting the groove walls the distance between flow paths $G_L$ being at less than 50% of the length $P_L$.

8. The tread (6) and undertread of claim 6 wherein the flow path (30) has the minimum height ($H_t$) being 3 mm (4/32 inch) or greater.

9. The tread (6) and undertread of claim 7 wherein the at least one groove having flow paths has a maximum groove gap length $G_L$ between adjacent flow paths and the flow paths (30) satisfy the relationship:

$$6 \text{ x } G_L \geq P_L > 2 \text{ x } G_L.$$

10. The tread (6) and undertread of claim 9 wherein $G_L$ is about 5 mm.

**Patentansprüche**

1. Verfahren zum Herstellen eines Laufstreifens (6) und eines Unterprotektors (54) für einen Reifen (4) in einer Form mit den Schritten, daß:

    eine Form (2) zum Bilden eines Laufstreifenprofils in dem Kautschukreifenlaufstreifen (6) bereitgestellt wird, wobei die Form mindestens eine Rippe (20) zum Bilden einer Rille (40) in dem Reifenlaufstreifen aufweist, wobei die mindestens eine Rippe (20) eine Vielzahl von längs gestreckten Durchflußwegen (10) aufweist, wobei die gestreckten Durchflußwege Kerben sind, die in die Rippen geschnitten und beabstandet angeordnet sind, wobei die Fläche Ap des Durchflußweges (10), wenn im Querschnitt längs der Länge ($P_L$) des Durchflußweges (10) betrachtet, größer als die Fläche zwischen benachbarten Durchflußwegen in der gleichen Tiefe ist, wie von einer Spitze (11) der Rippe (20), die die Basis (44) der Rille (40) bildet, zur minimalen Höhe ($H_t$) an der Oberseite der den Durchflußweg (10) bildenden Kerbe gemessen;
    unvulkanisierter Laufstreifenkautschuk in die Form eingesetzt wird;
    Wärme und Druck aufgebracht werden, um den Laufstreifen und den Unterprotektor zu vulkanisieren und zu formen;
    der vulkanisierte und geformte Laufstreifen (6) und Unterprotektor (54) aus der Form (2) entfernt werden,

    **dadurch gekennzeichnet, daß** das Dickenmaß $U_t$ des Unterprotektors im Bereich zwischen 2 mm und 6 mm liegt, wie zwischen der Basis (44) der Rille (40) radial nach innen gemessen.

2. Verfahren nach Anspruch 1, wobei der Durchflußweg (10) in der Formrippe (20) durch eine gestreckte Länge $P_L$ definiert ist, und eine minimale Kerbentiefe, gemessen von der Basis (44) der durch die Formrippe (20) gebildeten Rille (40), von t und eine Breite Pw aufweist, die sich quer durch die Formrippe (20) erstreckt, wobei sie die jeweiligen durch die Formrippen (20) gebildeten Rillenwände schneidet, wobei die Distanz zwischen den Durchflußwegen (10) kleiner als 50 % der Länge $P_L$ ist.

3. Verfahren nach Anspruch 1, wobei der Schritt des Bereitstellens einer Form (2) den Schritt umfaßt, daß die Durchflußwegtiefe t in der Formrippe (20) mit zumindest 3 mm (4/32 Zoll) festgelegt wird.

4. Verfahren nach Anspruch 3, wobei der Schritt des Bereitstellens einer Form (2) den Schritt umfaßt, daß zumindest eine eine Umfangsrille (40) bildende Formrippe (20) vorgesehen wird, die die Vielzahl von Durchflußwegen (10) aufweist, wobei die Durchflußwege Enden, die unter 20° geneigt sind, und eine Spaltlänge $G_L$ zwischen benachbarten Durchflußwegen aufweisen, wobei die Vielzahl von Durchflußwegen (10) die Beziehung

$$6 \times G_L \geq P_L \geq 2 \times G_L$$

erfüllt.

5. Verfahren nach Anspruch 1, das ferner die Schritte umfaßt, daß: ein Reifenmantel in die Form (2) zusammen mit dem unvulkanisierten Laufstreifenkautschuk eingesetzt wird, wodurch eine Reifenanordnung (8) gebildet wird; und die Reifenanordnung (8) nach dem Vulkanisieren und Formen der Anordnung aus Laufstreifen (6), Unterprotektor (54) und Reifenmantel (7) entfernt wird.

6. Laufstreifen (6) und Unterprotektor (54) für einen Reifen (4), wobei der Laufstreifen eine Vielzahl von Rillen (40) aufweist, wobei mindestens eine Rille eine Basis (44) und eine Vielzahl von mit Gummi gefüllten, längs gestreckten Durchflußwegen (30) aufweist, wobei die Länge als die Richtung längs des Rillenweges definiert ist, wobei die Durchflußwege (30) sich der Breite nach von der einen Rillenwand zur entgegengesetzten Rillenwand erstrecken und längs der Länge der Rille (40) beabstandet angeordnet sind, wobei die Fläche des Durchflußweges, wenn in Querschnitten längs der Länge des Durchflußweges (30) betrachtet, größer als die Leerfläche zwischen benachbarten Durchflußwegen in der gleichen Tiefe ist, wie von der Basis der Rille zur minimalen Höhe ($H_t$) an der Oberseite des Durchflußweges gemessen, **dadurch gekennzeichnet, daß** das Dickenmaß $U_t$ des Unterprotektors im Bereich zwischen 2 mm und 6 mm liegt, wie zwischen der Basis (44) der Rille (40) radial nach innen gemessen.

7. Laufstreifen (6) und Unterprotektor (54) nach Anspruch 6, wobei die mit Gummi gefüllten Durchflußwege (30) eine gestreckte Länge $P_L$ und eine Breite Pw aufweisen, gemessen senkrecht zur Länge $P_L$, wobei die Breite Pw sich quer durch die Rille (40) erstreckt und die Rillenwände schneidet, wobei die Distanz zwischen Durchflußwegen $G_L$ bei weniger als 50% der Länge $P_L$ liegt.

8. Laufstreifen (6) und Unterprotektor nach Anspruch 6, wobei der Durchflußweg (30) eine minimale Höhe ($H_t$) aufweist, die 3 mm (4/32 Zoll) oder größer ist.

9. Laufstreifen (6) und Unterprotektor nach Anspruch 7, wobei die zumindest eine Rille, die Durchflußwege aufweist, eine maximale Rillenspaltlänge $G_L$ zwischen benachbarten Durchflußwegen aufweist, und die Durchflußwege (30) die Beziehung:

$$6 \times G_L \geq P_L \geq 2 \times G_L$$

erfüllen.

10. Laufstreifen (6) und Unterprotektor nach Anspruch 9, wobei $G_L$ ungefähr 5 mm beträgt.

**Revendications**

1. Procédé de moulage d'une bande de roulement (6) et d'une sous-sculpture (54) pour un bandage pneumatique (4), comprenant les étapes consistant à :

procurer un moule (2) pour former une sculpture de bande de roulement dans la bande de roulement en caoutchouc (6) du bandage pneumatique, le moule comportant au moins une nervure (20) pour former une rainure (40) dans la bande de roulement du bandage pneumatique, ladite ou lesdites nervures (20) comportant plusieurs voies d'écoulement (10) étirées en longueur, les voies d'écoulement étirées en longueur prenant la forme d'encoches pratiquées dans la nervure et espacées l'une de l'autre, dans lequel la superficie de section $A_p$ de la voie d'écoulement (10) lorsqu'on regarde en coupe transversale dans le sens de la longueur ($P_1$) de la voie d'écoulement (10) est supérieure à la superficie de section entre des voies d'écoulement adjacentes à la même profondeur telle qu'on la mesure depuis une extrémité (11) de la nervure (20) qui forme la base (44) de la rainure (40) jusqu'à la hauteur minimale ($H_t$) au sommet de l'encoche formant la voie d'écoulement (10) ;
insérer du caoutchouc non vulcanisé de bande de roulement dans le moule ;
appliquer de la chaleur et de la pression pour vulcaniser et façonner la bande de roulement et la sous-sculpture ;
retirer du moule (2) la bande de roulement (6) ainsi que la sous-sculpture (54) vulcanisées et façonnées ;

**caractérisé en ce que** l'épaisseur nominale $U_t$ de la sous-sculpture se situe dans le domaine entre 2 mm et 6 mm, telle qu'on la mesure entre la base (44) de la rainure (40) en direction radiale vers l'intérieur.

2. Procédé selon la revendication 1, dans lequel la voie d'écoulement (10) dans la nervure (20) du moule est définie par une dimension en longueur étirée $P_L$ possédant une profondeur d'encoche minimale t mesurée à partir de la base (44) de la rainure (40) formée par la nervure (20) du moule et une largeur $P_W$ s'étendant à travers la nervure (20) du moule en coupant les parois des rainures respectivement formées par les nervures (20) du moule, la distance entre les voies d'écoulement (10) représentant moins de 50 % de la longueur $P_L$.

3. Procédé selon la revendication 1, dans lequel l'étape consistant à procurer un moule (2) englobe l'étape consistant à établir la profondeur t de la voie d'écoulement dans la nervure (20) du moule à une valeur minimale de 3 mm (4/32 de pouce).

4. Procédé selon la revendication 3, dans lequel l'étape consistant à procurer un moule (2) englobe l'étape consistant à procurer au moins une nervure (20) du moule formant une rainure circonférentielle (40), comportant plusieurs voies d'écoulement (10), dans lequel les voies d'écoulement possèdent des extrémités inclinées en formant un angle de 20° et une longueur d'espace intermédiaire $G_L$ entre des voies d'écoulement adjacentes, dans lequel lesdites plusieurs voies d'écoulement (10) répondent à l'équation $6 \times G_L \geq P_L \geq 2 \times G_L$.

5. Procédé selon la revendication 1, comprenant en outre les étapes consistant à :

insérer une carcasse de bandage pneumatique dans le moule (2) de manière conjointe avec le caoutchouc de bande de roulement non vulcanisé, pour ainsi obtenir un assemblage de bandage pneumatique (8) ;
et retirer l'assemblage de bandage pneumatique (8) après vulcanisation et façonnement de l'assemblage de la bande de roulement (6), de la sous-sculpture (54) et de la carcasse (7) du bandage pneumatique.

6. Bande de roulement (6) et sous-sculpture (54) pour un bandage pneumatique (4), la bande de roulement possédant plusieurs rainures (40), au moins une rainure possédant une base (44) et plusieurs voies d'écoulement (30) s'étendant en longueur et qui sont remplies avec du caoutchouc, la longueur étant définie comme étant la direction s'étendant le long de la voie de la rainure, les voies d'écoulement (30) s'étendant en largeur d'une paroi de rainure à la paroi de rainure opposée et étant espacées sur la longueur de la rainure (40), dans lesquelles la superficie de section de la voie d'écoulement lorsqu'on regarde en coupe transversale dans le sens de la longueur de la voie d'écoulement (30) est supérieure à la zone de vide s'étendant entre des voies d'écoulement adjacentes, à la profondeur telle que mesurée depuis la base de la rainure jusqu'à la hauteur minimale ($H_t$) au sommet de la voie d'écoulement, **caractérisées en ce que** l'épaisseur nominale $U_t$ de la sous-sculpture se situe dans le domaine entre 2 mm et 6 mm, telle qu'on la mesure entre la base (44) de la rainure (40) en direction radiale vers l'intérieur.

7. Bande de roulement (6) et sous-sculpture (54) selon la revendication 6, dans lesquelles les voies d'écoulement (30) qui sont remplies avec du caoutchouc possèdent une longueur étirée $P_L$, une largeur $P_W$ mesurée perpendiculairement à la longueur $P_L$, la largeur $P_W$ s'étendant à travers la nervure (40) coupant les parois de la nervure, la distance $G_L$ s'étendant entre les voies d'écoulement représentant moins de 50 % de la longueur $P_L$.

8. Bande de roulement (6) et sous-sculpture selon la revendication 6, dans lesquelles la voie d'écoulement (30) possède une hauteur minimale ($H_t$) s'élevant à 3 mm (4/32 de pouce) ou plus.

9. Bande de roulement (6) et sous-sculpture selon la revendication 7, dans lesquelles ladite ou lesdites rainures possédant des voies d'écoulement possèdent une longueur maximale d'espace intermédiaire $G_L$ entre des voies d'écoulement adjacentes et les voies d'écoulement (30) répondent à l'équation $6 \times G_L \geq P_L \geq 2 \times G_L$.

10. Bande de roulement (6) et sous-sculpture selon la revendication 9, dans lesquelles $G_L$ s'élève à environ 5 mm.

FIG-1

FIG-2

FIG-3

FIG-4

FIG-5

FIG-6

FIG-7

FIG-8

FIG-9

FIG-10